# EUROPÄISCHE PATENTSCHRIFT

(11) **EP 4 126 762 B1**
(45) Veröffentlichungstag und Bekanntmachung des Hinweises auf die Patenterteilung: **25.02.2026**
(21) Anmeldenummer: 21719047.9
(22) Anmeldetag: 30.03.2021
(51) Int. Cl.: C01B 25/12, C02F 11/10, C02F 101/10

(54) **VERFAHREN UND VORRICHTUNG ZUR GEWINNUNG VON PHOSPHOR AUS KLÄRSCHLAMM**
PROCESS AND DEVICE FOR RECOVERING PHOSPHORUS FROM SEWAGE SLUDGE
PROCÉDÉ ET DISPOSITIF DE RÉCUPÉRATION DE PHOSPHORE À PARTIR DE BOUES D'ÉPURATION

(30) Priorität: 30.03.2020 DE 102020001989
(43) Veröffentlichungstag der Anmeldung: 08.02.2023
(73) Patentinhaber: Grenzebach BSH GmbH, 36251 Bad Hersfeld (DE)
(72) Erfinder: MEYER, Michael, 36251 Bad Hersfeld (DE)
(74) Vertreter: Prünte, Peter
(86) Internationale Anmeldenummer: PCT/EP2021/025122
(87) Internationale Veröffentlichungsnummer: WO 2021/197670

(56) Entgegenhaltungen:
- EP-A1- 2 160 438
- EP-A2- 0 972 577
- WO-A1-93/00555
- DE-U1- 202018 004 168
- US-A1- 2013 136 682
- MATTENBERGER H ET AL: "Sewage sludge ash to phosphorus fertiliser (II): Influences of ash and granulate type on heavy metal removal", WASTE MANAGEMENT, ELSEVIER, NEW YORK, NY, US, vol. 30, no. 8-9, 1 August 2010 (2010-08-01), pages 1622 - 1633, XP027080243, ISSN: 0956-053X, [retrieved on 20100424], DOI: 10.1016/J.WASMAN.2010.03.037

## Beschreibung

Die Erfindung betrifft ein Verfahren zur Gewinnung von Phosphor aus Klärschlamm nach dem Oberbegriff des Patentanspruchs 1.

In EP 2 160 438 B1 wird ein Verfahren zur Herstellung von Phosphorpentoxid (P2O5) offenbart, das zurückgeht auf ein ursprünglich von Robert A. Hard erfundenes Verfahren, das daher nach seinem Erfinder auch als Hard-Verfahren bezeichnet wird. Das Verfahren umfasst die Bildung eines Ofenbetts unter Verwendung von Beschickungsagglomeraten in einem Gegenstrom-Drehrohrofen. Die Agglomerate enthalten Phosphaterzteilchen, kohlenstoffhaltige Materialteilchen und ausreichend Siliciumdioxidteilchen. Hierbei sollen die Agglomerate ein Calcium-zu-Siliciumdioxid-Molverhältnis von weniger als 1,0 aufweisen, wobei einzelne Agglomerate im Wesentlichen die gleiche elementare Zusammensetzung, das gleiche Calcium-zu-Siliciumdioxid-Molverhältnis und den gleichen Anteil an überschüssigem festen Kohlenstoff im Vergleich zu einem theoretischen Kohlenstoffbedarf für die Reduktion des gesamten Phosphats in dem Erz aufweisen. Bei der Durchführung des Verfahrens wird eine Betttemperatur bei oder über 1180 °C entlang eines Teils der Bettlänge aufrechterhalten. Es wird ein Ofenabgas erzeugt, wobei gleichzeitig Phosphorpentoxid aus dem Ofenabgas gewonnen wird, wobei der Ofen einen Rückstand austrägt, der verarbeitete Agglomerate enthält, wobei weniger als 10% des Phosphateintrags der Agglomerate in den Ofen als Phosphat im Rückstand verbleiben.

Aus US 2013/0136682 A1 sind Verfahren zur Gewinnung von Phosphorpentoxid bekannt. EP 0 972 577 A2 offenbart ein Verfahren zur Extraktion von Phosphor aus organischem Schlamm. DE 20 2018 004 168 U1 betrifft eine Phosphoranlage in lufttechnischer Bauweise. Ein Verfahren zur Herstellung von Phosphorpentoxid ist aus WO 2008/153521 A1 bekannt. WO 93/00555 A1 offenbart ein Verfahren zur kombinierten Klärschlamm- und Müllverbrennung.

Aus MATTENBERGER H ET AL: "Sewage sludge ash to phosphorus fertilizer (II): Influences of ash and granulate type on heavy metal removal", WASTE MANAGEMENT, ELSEVIER, NEW YORK, NY, US, Bd. 30, Nr. 8 - 9, 1. August 2010 (2010-08-01), Seiten 1622-1633, XP027080243, ISSN: 0956-053X, DOI: 10.1016 / J. WASMAN.2010.03.037 ist eine Vorrichtung zur Produktion von Phosphor aus Klärschlamm unter Verwendung eines Drehrohrofens bekannt.

Gemäß der Verordnung über die Verwertung von Klärschlamm, Klärschlammgemisch und Klärschlammkompost (Klärschlammverordnung - AbfKlärV) wird eine Neuordnung der Klärschlammaufbereitung sowie -entsorgung in Deutschland angestrebt. Insbesondere soll durch die Verordnung der Phosphor in den Wirtschaftskreislauf zurückgeführt werden (Bundesgesetzblatt 27.09.2017).

Gemäß dieser novellierten Fassung der Klärschlammverordnung ist die Phosphorrückgewinnung bei Phosphorgehalten von mehr als 20 g/kg Trockensubstanz Klärschlamm vorgesehen. Dieser Grenzwert ist für Kläranlagen mit
einer Größe von über 100.000 bis herunter zu einer Größe von 50.000 Einwohnerwerten, nach einer Übergangsfrist von 12 bzw. 15 Jahren zwingend einzuhalten. Für Behandlungsanlagen für Einwohnerwerte von weniger als 50.000 und Phosphorkonzentrationen von weniger als 20 g/kg Trockensubstanz Klärschlamm ist die bodenbezogene Verwertung unbefristet zulässig (Bundesgesetzblatt 27.09.2017; AbfKlärV).

Ansatzpunkt für das Recyceln des Phosphors ist die jährlich anfallende Phosphorfracht von kommunalen Kläranlagen von 61.000 t/a. Hier werden unterschiedliche Stoffströme, die bei der Aufbereitung des Abwassers entstehen, betrachtet. Dabei wird zwischen Abwasser (Kläranlagenablauf), Prozesswasser (Schlammwasser), Klärschlamm und Klärschlammaschen unterschieden. Alle genannten Ansätze stehen für eine mögliche Rückgewinnung des Phosphors zur Verfügung, jedoch finden sich im entwässerten Klärschlamm sowie den Klärschlammaschen die höchsten Phosphorkonzentrationen.

Die heutige Verwertungssituation von Klärschlamm in Deutschland ist vor allem durch die thermische Entsorgung geprägt. Die landwirtschaftliche Verwertung stellt den zweitgrößten Entsorgungsweg dar.

Durch die Neuregelung der Verordnung wird der Anteil des Klärschlammes, welcher in der Landwirtschaft eingesetzt werden kann, stark eingeschränkt. Daher gewinnen Phosphorrückgewinnungsverfahren, die bei Rohschlamm, ausgefaultem Klärschlamm und der Klärschlammasche ansetzen, immer mehr an Bedeutung.

Im Abwasser von Kläranlagen tritt der Phosphor als Orthophosphat (PO₄³⁻) in anionischer Form am häufigsten auf. Daneben existieren organisch gebundener Phosphor und Polyphosphate. Sowohl der organisch gebundene Phosphor als auch die Polyphosphate können durch Mikroorganismen zu Orthophosphat mineralisiert oder hydrolysiert werden.

Der organisch gebundene Phosphor ist insbesondere biologisch gebundener Phosphor. Diese Form findet sich in der biologischen Abwasserreinigung wieder. Bakterien nutzen unter anaeroben Bedingungen den in ihrer Zellmasse eingelagerten Phosphorspeicher (Polyphosphate) als Energiequelle. Befinden sich die Bakterien wieder im aeroben Milieu nehmen sie erneut gelöste Phosphate auf.

In Kläranlagen wird im Prozessschritt der Phosphorelimination das Phosphat mittels Fällungsmitteln wie Aluminium- oder Eisensalzen sowie Kalk gebunden. Dadurch werden die zunächst im Wasser gelösten Phosphate in Form von unlöslichen Salzen chemisch gebunden.

Abhängig von den Orten der Entnahmestellen unterscheiden sich die Rückgewinnungspotenziale als auch die Art der Phosphorverbindung. Im Kläranlagenablauf liegt der Phosphor in gelöster Form als Orthophosphat vor. Bei einer Rückgewinnung über das Schlammwasser hängt der Rückgewinnungsgrad stark von der Betriebsweise der Abwasserreinigungsanlage ab. Für die größtmögliche Rückgewinnung bieten sich die Einsatzstellen nach der Entwässerung sowie der thermischen Verwertung an. Dort liegt der Phosphor biologisch und chemisch gebunden in der Schlammmatrix vor. Für eine Rückgewinnung muss dieser jedoch rückgelöst werden. Nach der thermischen Verwertung, meist durch eine Monoverbrennungsanlage, liegt der Phosphor chemisch gebunden in der Klärschlammasche vor.

Durch den deutlichen Massenverlust während der Verbrennung des Klärschlamms wird eine Aufkonzentrierung des Phosphors in der Klärschlammasche erreicht. Somit weist die Klärschlammasche gegenüber den anderen Erscheinungsformen von Rückständen den höchsten Phosphorgehalt auf.

Im Prozesswasser der Abwasseraufbereitungsanlagen reichert sich der gelöste Phosphor durch Fällung und Abscheidung im Klärschlamm an. Bei der anschließenden Entwässerung werden 50 bis 80 % des Wassers abgeschieden.

Je nach Art der Dosierstellen können drei Arten von Behandlungsverfahren unterschieden werden. In der Vorfällung wird das Fällungsmittel vor dem Absetzbecken zudosiert. Allgemein können fast alle Fällungsmittel eingesetzt werden.

Bei der Simultanfällung erfolgt die Fällmittelzugabe vor, nach oder direkt in das Belebungsbecken. In diesem Behandlungsprozess werden vorzugsweise Eisen (III)-Salze eingesetzt, möglich sind aber auch Aluminium (III)-Salze sowie Eisen (II)-Salze. Die Simultanfällung stellt eine Sofortmaßnahme zur Phosphoreliminierung dar, anschließend wird der ausgefällte Phosphor mit dem Überschussschlamm entfernt.

Die Nachfällung ist eine selbstständige Fällungsstufe, die hinter den Nachklärbecken installiert wird. Hierbei sind neben Dosier- und Mischungsanlagen auch zusätzliche Reaktionsbecken wie Flockungsbecken notwendig. Bei diesem Verfahren können alle Fällmittel eingesetzt werden, jedoch ist der Verbrauch deutlich höher als bei den anderen Behandlungsverfahren.

Dreiwertiges Eisen Fe³⁺ kommt als Eisenchlorid (FeCl₃) oder Eisen (III)-Sulfat Fe₂(SO₄)₃ zum Einsatz. Weiterhin kann auch zweiwertiges Eisen als Eisensulfat FeSO₄ (Grünsalz), das erst durch Reaktion mit Sauerstoff zu Fe³⁺ oxidiert wird, genutzt werden.

4Fe²⁺ + O₂ + 4H⁺ → 4Fe³⁺ + 2H₂O

Diese Fällmittel bilden schwer lösliches Eisenphosphat FePO₄, welches die Flockenbildung sowie die Absetzeigenschaften verbessert. Gleichzeitig führt das Fällmittel auch zur Elimination von Polyphosphaten und organischem Phosphor.

FeCl₃ + PO₄³⁻ → FePO₄ + 3 Cl⁻

Fe₂(SO₄)₃ + 2 PO₄³⁻ → 2 FePO₄ + 3 SO₄²⁻

In Form von Aluminiumsulfat Al₂(SO₄)₃ · 18 H₂O wird der vorhandene Phosphor mittels Al³⁺ ausgefällt. Das dreiwertige Aluminium-Ion bildet gut absetzbare Flocken und findet daher oft Anwendung im entsprechenden Behandlungsverfahren.

Al₂(SO₄)₃ + 18 H₂O + 2 PO₄³⁻ → 2 AlPO₄ + 3 SO₄²⁻ + 18 H₂O

Bei der Kalk-Phosphat-Fällung wird mit Calciumhydroxid ein Enthärtungsprozess des Abwassers eingeleitet, dabei entsteht ein Niederschlag von Calciumcarbonat. Die Calciumphosphatfällung setzt erst ein, wenn 60 bis 80 % des Calciumcarbonats gebildet wurden.

3 Ca(OH)₂ + 2 PO₄³⁻ → Ca₃(PO₄)₂ + 6 OH⁻

Die Fällung mit Kalkmilch wird durch die Problematik des hohen Schlammanfalls sowie Kalkausfällung in den Rohrleitungen der Schlammaufbereitungsanlage zusehends erschwert. Phosphor ist in verschiedenen Fraktionen der Abwasserreinigungsanlage zu finden. So unterscheidet sich auch die Phosphorfracht in den betrachteten Stoffströmen.

Es gibt verschiedene Phosphorrecyclingverfahren, die im technischen Großmaßstab betrieben werden. Dies sind insbesondere thermochemische und metallurgische Verfahren.

Aus DE 102 43 840 B4 ist ein Verfahren zur Abtrennung von Schwermetallen aus phosphathaltiger Klärschlammasche bekannt. Hierbei werden Alkali- und/oder Erdalkalichloride in die Asche gemischt. Anschließend erfolgt eine Erwärmung der Mischung über den Siedepunkt der sich bildenden Chloride der Schwermetalle in einem geschlossenen System, beispielsweise in einem Drehrohrofen. Die aus der Mischung austretenden Schwermetallchloride wie Cadmium, Kupfer, Quecksilber, Blei, Molybdän, Zinn und Zink flüchtige Metallchloride und Oxidchloride gebildet, welche sich aus der Asche in das Abgas verflüchtigen, werden sodann getrennt aufgefangen.

Die derzeitige industrielle Anwendung sieht die Nutzung von Natriumsulfat als Additiv zur Asche vor. Dabei soll Rhenanit (CaNaPO₄) die Hauptkomponente der mineralischen Phosphorstufe darstellen, welcher auch als Phosphordünger zur Verfügung steht. Das Verfahren beruht auf dem Kalzinieren des Phosphors, dabei werden Natriumsulfat, Klärschlamm als Trockensubstanz sowie Asche aus dem Heißgaszyklon hinzugegeben und bei 900 bis 1.000°C in einem belüfteten Drehrohrofen behandelt. Nach der thermochemischen Behandlung wird das Produkt granuliert und getrocknet. Das sich bildende Abgas, welches unter anderem die Schwermetalle enthält, wird über mehrere Schritte in einer Abgasreinigung aufbereitet (vgl. Schaaf, T., Hermann, L. (2016): Verfahren zur Düngemittelherstellung aus Klärschlammaschen - ASH DEC Prozess. Hg. v. Outotec GmbH & Co. KG. Hessen. Online verfügbar unter https://umwelt.hessen.de/sites/default/files/media/hmuelv/10 impulsvortrag ash dec verfahr en.pdf; Adam, C.; Peplinski, B.; Michaelis, M.; Kley, G.; Simon, F-G (2009): Thermochemical treatment of sewage sludge ashes for phosphorus recovery. In: Waste management (New York, N.Y.) 29 (3), S. 1122 bis 1128. DOI: 10.1016/j.wasman.2008.09.011; Stemann, Jan; Peplinski, Burkhard; Adam, Christian (2015): Thermochemical treatment of sewage sludge ash with sodium salt additives for phosphorus fertilizer production - Analysis of underlying chemical reactions. In: Waste management (New York, N.Y.) 45, S. 385-390. DOI: 10.1016/j.wasman.2015.07.029).

Auch aus EP 2 874 763B1 ist ein metallurgisches Phosphorrecycling bekannt, das die stoffliche sowie energetische Verwertung von phosphathaltigen Abfällen kombiniert. Hierzu werden Klärschlamm sowie Klärschlammaschen zu Briketts gepresst und mit Kalkstein sowie Gießereikoks versetzt. Der Koks soll die erforderliche Wärmeenergie bereitstellen sowie zur reduzierenden Atmosphäre im Ofenschacht beitragen. Die mineralischen Bestandteile des Klärschlamms werden beispielsweise in einem Kupolofen bei 1.450 bis 2.000 °C zu einer Schlacke geschmolzen. Im Schacht des Ofens verdampfen leichtflüchtige Schwermetalle und werden in der Gasreinigung abgeschieden. Das unter diesen Temperaturen gebildete Synthesegas kann zusammen mit der Abwärme energetisch genutzt werden. Bei höheren Temperaturen schmelzen die restlichen Metalle und bilden eine eisenreiche Schlacke, die sich aufgrund der höheren Dichte im Herd des Ofens sammelt. Phosphorreiche flüssige Schlacke, die sich oberhalb der Metallschmelze im Ofenherd befindet, wird durch Abstiche in unterschiedlicher Höhe von der eisenreichen Schmelze getrennt. Mit diesem Verfahren können somit eine phosphathaltige Schlacke, eine eisenreiche Metalllegierung sowie das Synthesegas als Nebenprodukt gewonnen werden. Es ist bekannt, dass der Phosphor in den gewonnenen Produkten unterschiedlich stark verteilt ist. So findet sich sowohl im Eisenabstich als auch im Filterstaub der Phosphor wieder. In der granulierten Schlacke wird ein Phosphorgehalt von lediglich 2,2 bis 2,5 Massenprozent erreicht.

In einem weiteren bekannten thermischen Verfahren zum Phosphorrecycling wird aus Klärschlammaschen bei Temperaturen von mindestens 1.500 °C unter reduzierenden Bedingungen elementarer Phosphor als P₂ gewonnen und anschließend zu Phosphorsäure umgesetzt.

In einem anderen bekannten thermischen Verfahren ist es durch den Einsatz eines Drehrohrofens ist möglich, über zwei Zonen Phosphorpentoxid herzustellen. Durch eine ausreichende Zugabe von Kieselsäure lässt sich das Bilden von Schmelzen unterbinden. In einer ersten reduzierenden Zone bildet sich Kohlenstoffmonoxid:

2 Ca₃(PO₄)₂ + 6 SiO₂ + 10 C → 6 CaSiOs + 10 CO + P₄

In einer zweiten oxidierenden Zone findet eine Nachverbrennung in der Gasphase statt:

P₄ + 5 O₂ → 2 P₂O₅

CO + ½ O₂ → CO₂

In einer nachgeschalteten Abgasreinigung wird das Gas in einem Zyklon entstaubt. Anschließend wird das Phosphorpentoxid in einem Wäscher unter Bildung von Phosphorsäure absorbiert.

Gemäß WO 2005/118468 A2, US 7 378 070 B2, US 7 910 080 B2, US 2013/0136682 A1 und US 2016/0090305 A1 wurde dieses Verfahren verbessert.

Es wird eine Hochtemperaturreaktion offenbart, die innerhalb des Ofenbettes abläuft:

Ca₁₀(PO₄)₆F_{2 +} 9 SiO₂ + 15 C → 3 P₂ ↑ +15 CO ↑ +9 CaSiO_{3 +} CaF₂

Für die dargestellte Reaktion ist es von Vorteil, wenn ein gleichmäßiges Temperaturprofil mit ausreichenden Verweilzeiten eingehalten wird. Es wird eine Mindesttemperatur von 1.180 °C genannt, jedoch wird eine Temperatur von 1.225 bis 1.250 °C empfohlen. Wie in der Reaktionsgleichung dargestellt, sollte der Kohlenstoff in reaktiver Form mit einem Molverhältnis von C : P von mindestens 2,5 vorliegen. Um das chemische Gleichgewicht auf die Seite der Produkte zu verlagern, soll der Kohlenstoff im Verhältnis zu Phosphor überstöchiometrisch vorliegen. Weiterhin wird im Zusammenhang der vollständigen Entfernung des Phosphors aus der Ofenlast die Bildung von Eisenphosphiden beschrieben. Wird Fluorapatit reduziert, entstehen als dampf- bzw. gasförmige Reaktionsprodukte Phosphor-Metall-Dampf sowie Kohlenstoffmonoxid. Beim Überschreiten des Atmosphärendruckes entweicht das Gasgemisch aus den Pellets in die umliegende Ofenatmosphäre (Grundsätzlich wird der Ofen bei Atmosphärendruck betrieben). Dabei liegt der verbliebene Phosphor im Rückstand der Pellets vollständig an Eisen in Form von FeP und Fe₂P gebunden vor. Es ist die Aufgabe der Erfindung, ein Verfahren zur Gewinnung von Phosphor aus Klärschlamm zu schaffen.

Diese Aufgabe wird gelöst, wie in Patentanspruch 1 angegeben.

Gemäß der Erfindung wurde herausgefunden, dass es möglich ist, das Hard-Verfahren, wie es aus den oben bezeichneten Patentdokumenten hervorgeht, auf den Einsatz bei Klärschlamm zu übertragen.

Der Klärschlamm wird vorher mechanisch entwässert. Je nach chemischer Zusammensetzung des Klärschlammes kann es nötig sein, feingemahlenen Quarzsand mit einer Korngröße von weniger als 100 µm zuzugeben und zu mischen.

Das stöchiometrische Verhältnis der Reaktanden Phosphor (P), Kohlenstoff (C) und Siliciumdioxid (SiO₂) beträgt: P : C : SiO₂ = 2:5:3 (molar) bzw. ≈ 1:1:3 (nach Massenanteilen) muss für einen technischen Prozess dahingehend verändert werden, dass alle Reaktanden außer dem Zielelement in überstöchiometrischen Mengen zuzugeben sind, damit die Phosphor-Ausbeute maximiert wird. Die Erfahrung bei der Phosphorgewinnung hat gezeigt, dass Kohlenstoff mit dem Faktor 3 und SiO₂ mit dem Faktor 1,7 überstöchiometrisch einzusetzen sind. Damit ist das reale Verhältnis der Einsatzmaterialien P : C : SiO₂ ≈ 1:3:5 nach Massenanteilen als Standardmischungsverhältnis anzusehen. In der Praxis liegt im Klärschlamm von Natur aus ein überstöchiometrischer Kohlenstoffanteil vor. Hierbei ist aber auf das Verhältnis von festem Kohlenstoff zu flüchtigen Bestandteilen zu achten. In vielen Klärschlämmen finden sich flüchtige Bestandteile von mehr als 50 Massenprozent, die bereits bei 900 °C für die Reaktion auf dem Boden des Drehrohrofens nicht mehr zur Verfügung stehen.

Daher kann nicht immer auf eine Zugabe festen Kohlenstoffs verzichtet werden.

Allein der Quarzsand muss überstöchiometrisch zugesetzt werden. Dieses pelletartige Produktgemisch wird dann einem Drehrohrofen zugeführt.

Die höchsten Phosphorausbeuten lassen sich mit steigender Temperatur, beispielsweise bei einer Temperatur von 1.250 °C oder mehr, erreichen. Die Verweilzeit sollte bei dieser Temperatur zwanzig Minuten nicht unterschreiten. Der Phosphoraustrag hängt maßgeblich vom Fällmittel und vom Fe : P-Massenverhältnis oder Molverhältnis von Eisen zu Phosphor ab. In dem Hochtemperaturprozess hat sich gezeigt, dass die Fe-basierten Fällmittel (meist FeCl₃) und der dadurch hervorgerufene hohe Eisenanteil den Phosphoraustrag aus dem Klärschlamm stark limitieren. Der Phosphoraustrag ist im Massenverhältnis 2 von Fe : P linear abfallend. Je höher der Eisenanteil ist, desto geringer ist der Phosphoraustrag, so dass das Fe: P-Molverhältnis niedriger als 0,95 im Klärschlamm sein muss, wenn man einen Phosphoraustrag von mehr als 50 % des in dem Klärschlamm vorhandenen Phosphors erzielen möchte.

Erfindungsgemäß wird unter Einsatz des Hard-Verfahrens bei Klärschlamm ein Phosphoraustrag von über 80 Massenprozent erreicht. Dabei ist das Verhältnis von Eisen zu Phosphor das ausschlaggebende Kriterium für die Phosphorrückgewinnung aus Klärschlamm. Je weniger Eisen im Klärschlamm enthalten ist, desto besser ist der Phosphoraustrag.

Gemäß einer Ausführungsform des Verfahrens erfolgt der Aufheizvorgang innerhalb von zehn Minuten, insbesondere innerhalb von weniger als fünf Minuten.

Die Erfindung bezieht sich auch auf eine Vorrichtung zur Durchführung dieses Verfahrens. Erfindungsgemäß kommt dabei ein Drehrohrofen zum Einsatz, der mit einer Zuführeinrichtung zur Zuführung von Klärschlamm ausgestattet ist.

Ebenso sind Mittel zum Abtransport der Schlacke vorgesehen.

Die Zuführvorrichtung ist angeschlossen an ein Transportmittel, insbesondere wenigstens ein Förderband, zum Transport von pelletiertem oder koksförmigem vorgetrockneten Klärschlamm zu einem Drehrohrofen und Heizmittel zur Erhitzung des Klärschlamms in dem Drehrohrofen sowie Mittel zum Auffangen von Phosphorpentoxid und Mittel zum Abtransport von Schlacke umfasst.

Nachstehend wird die Erfindung in Ausführungsbeispielen näher erläutert. Es zeigen:
- Fig. 1: den gasförmigen Phosphoraustrag aus Klärschlamm in Massenprozent in die Gasphase als Funktion des molaren Verhältnisses von Eisen zu Phosphor in verschiedenen Kläranlagen,
- Fig. 2: Säulendarstellungen des prozentualen Anteils des Phosphoraustrags in Abhängigkeit vom Fällungsmittel,
- Fig. 3a: einen Längsschnitt durch einen mit Klärschlammpartikeln befüllten Drehrohrofen in einer ersten Ausführungsform,
- Fig. 3b: einen Querschnitt durch den Drehrohrofen gemäß Fig. 3a entlang einer Schnittlinie A - A und
- Fig. 4: eine Anlage zur Zuführung von Klärschlamm, Kohlenstoff und Siliciumdioxid zu einem Drehrohrofen sowie zur Erzeugung von Phosphorpentoxid und zur Abführung eines Klärschlammrests, dem der Phosphor entzogen worden ist.

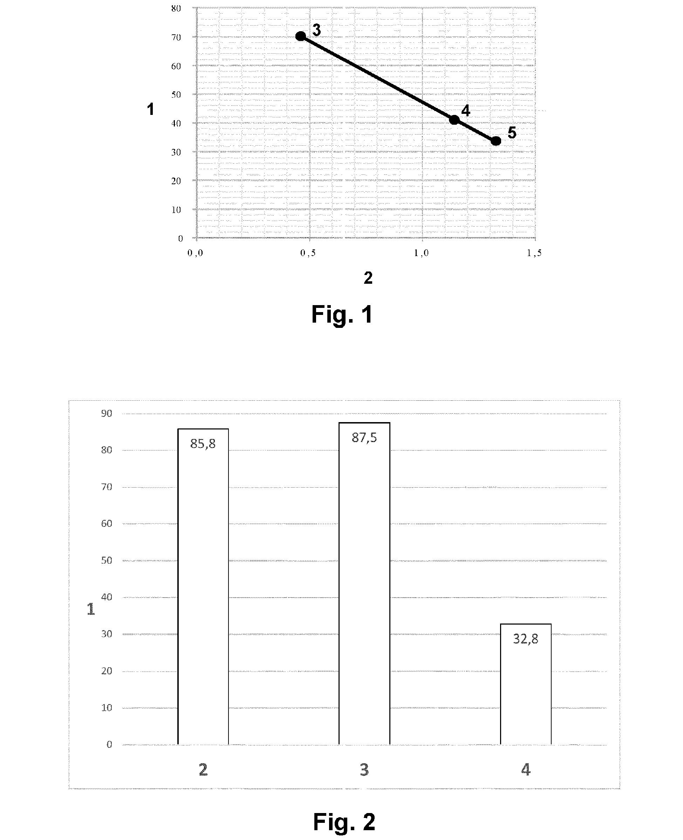

In der Auftragung des thermischen Phosphoraustrags 1 (Fig. 1) aus verschiedenen Klärschlämmen über dem Massenverhältnis 2 von Fe : P ergibt sich eine Gerade, die linear abfällt. Damit hat die Eisenkonzentration einen großen, wenn nicht gar den größten Einfluss auf den Spaltgrad der Phosphate. In Fig.1 werden die Ergebnisse anhand verschiedener Kläranlagen 3, 4 und 5 aufgezeigt. Je höher der Eisenanteil ist, desto geringer ist der Phosphoraustrag, wie er insbesondere in einem Drehrohrofen erhalten wird.

Für den vorliegenden Mechanismus wurde eine plausible Erklärung, welche mit der Bildung von Eisenphosphiden einhergeht, gefunden: Laut Untersuchungen der Bundesanstalt für Materialforschung und -prüfung (BAM) werden für Klärschlammaschen allgemein Phosphorgehalte von 1,5 bis 13,1 Massen-% angegeben. Weiterhin wird davon ausgegangen, dass in den Klärschlammaschen Aluminiumgehalte von 0,7 bis 20,2 Massenprozent, Eisengehalte von 1,8 bis 20,3 Massen-% sowie Calciumgehalte von 6,1 bis 37,8 Massenprozent vorliegen. Da diese Elemente zur Phosphorfällung eingesetzt werden, beeinflussen sie maßgeblich die Zusammensetzung des Klärschlammes, während der nach dem Hard-Verfahren behandelte Apatit hauptsächlich aus Calciumphosphat und dem Begleitelement Fluor besteht. Strukturuntersuchungen lieferten den Nachweis, dass bei hohen Temperaturen unter reduzierenden Bedingungen Eisenphosphide (Fe₂P und FeP), die einen geringen Dampfdruck aufweisen, gebildet werden. Daher wird erfindungsgemäß davon ausgegangen, dass die Ursache der geringen Phosphorausbeute durch die Bildung von Eisenphosphiden hervorgerufen wird. Nachstehend wird die Erfindung in einem Ausführungsbeispiel anhand der Zeichnungen näher erläutert. In Fig. 2 sind die Ergebnisse des thermochemischen Phosphorausbringens von calcium-, aluminium- und eisengefällten Klärschlamm ausgeführt.

In Fig. 2 ist ein thermochemischer Phosphoraustrag 1 in Prozent des insgesamt in dem Klärschlamm enthaltenen Phosphors dargestellt; dabei gibt die Säule 2 den Austrag des Phosphors als Calciumphosphat (Ca₃(PO)₄) bei Verwendung von Calcium als Fällungsmittel an, Säule 3 den Austrag des Phosphors als Aluminiumphosphat (AlPO₄) bei Verwendung von Aluminium als Fällungsmittel und die Säule 4 den Austrag des Phosphors als Eisenphosphat (FePO₄) bei Verwendung von Eisen als Fällungsmittel an. Es zeigt sich, dass Eisen die Wirksamkeit der thermochemischen Phosphorgewinnung stark herabsetzt.

Wenn ein Fällungsmittel auf der Basis von Aluminium verwendet wird, wie beispielsweise Aluminiumsulfat (Al₂(SO₄)₃ 18 H₂O), können bis zu 87,5 % Phosphor mittels thermochemischer Hochtemperaturkonversion zurückgewinnen. Dabei weist der Rückstand einen Phosphorgehalt von weniger als 20 g/kg auf. In Anbetracht der Klärschlammverordnung wird die Prämisse des Grenzwertes mit einem Phosphorgehalt weniger als 20 g/kg Trockensubstanz Klärschlamm sowie einem Rückgewinnungsgrad von min. 80 % eingehalten.

Durch die novellierte, oben bereits zitierte Klärschlammverordnung wurden die Voraussetzungen für den Einsatz von thermischen Verfahren stark verschärft. So muss für die Phosphorrückgewinnung aus Klärschlamm ein Verfahren angewandt werden, welches eine Reduzierung des Phosphorgehaltes um mindestens 50% oder auf weniger als 20 Gramm je Kilogramm Trockenmasse gewährleistet. Aus Asche oder den kohlenstoffhaltigen Rückständen, die nach einer Vorbehandlung des Klärschlammes anfallen, müssen mindestens 80 % des Phosphors zurückgewonnen werden (vgl. §§ 3a - 3c AbfKlärV).

Da Klärschlamm im Gegensatz zu Phosphaterz höhere Diversität in der Elementzusammensetzung aufweist, wird die Gewinnung eines reinen phosphorhaltigen Produktes beispielsweise durch Schwermetalle begrenzt.

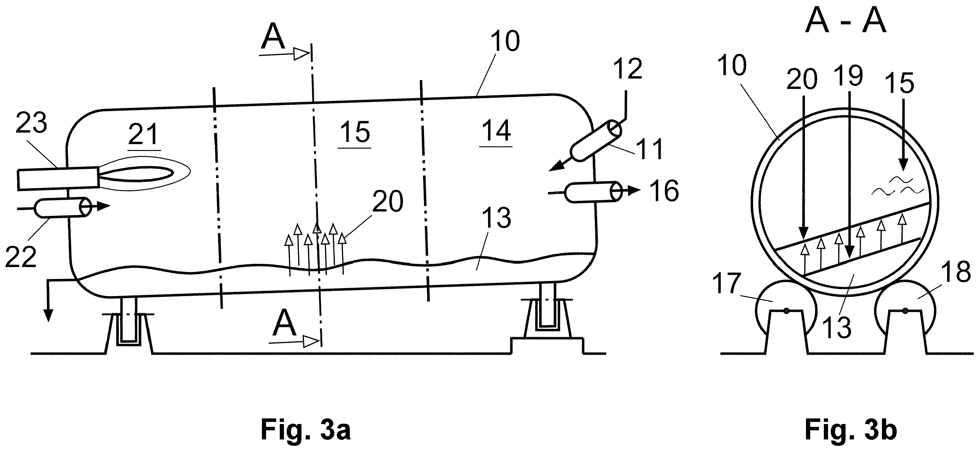

Gemäß der Erfindung wird der Prozess in einem Drehrohrofen 10 (Fig. 3a, 3b) nach der Art eines Wälzprozesses durchgeführt, wie er aus EP 3 243 915 A1 beim Einsatz zum Gewinnen von Wälzoxid aus zinkhaltigen Rohstoffen beispielsweise bekannt ist.

Die Wälzarbeit gehört zu einer Reihe von Verfahren, bei denen die Anreicherung der zu gewinnenden, oxidischen Inhaltsstoffe über die Bildung einer intermediären Metallphase mit anschließender Verflüchtigung und Rückoxidation im Gasstrom erfolgt. Die unerwünschten Reststoffe verbleiben überwiegend in einem hochviskosen Rückstand.

Durch die Rotation sowie infolge einer Neigung gegenüber der Horizontalen wird die feste Beschickung allmählich zum Austragsende entgegen dem Gasstrom bewegt. Die Anlage funktioniert also im sogenannten Gegenstromprinzip. Die Verweilzeit des Einsatzmaterials ist dabei abhängig von der Ausmauerung, der Länge, der Neigung und der Umdrehungsgeschwindigkeit des Wälzrohrofens. Dabei durchläuft der Klärschlamm 12 folgende drei Zonen, eine Trocknungszone, eine Aufheizzone mit einer Verbrennung kohlenstoffhaltiger Substanz, eine Hauptreaktionszone und eine Reoxidationszone. Der Klärschlamm 12 wird während einer Dauer von zehn Minuten oder von wenigstens fünf Minuten aufgeheizt.

Über einen Einlass 11 wird kühles Aufgabegut, beispielsweise mit Quarzsand pelletierter Klärschlamm 12 zugeführt, beispielsweise über eine Schurre, eine Produktrutsche oder ein Förderband. Der Klärschlamm 12 weist eine Feuchtigkeit von nicht mehr als 10 % oder weniger, beispielsweise von 7 %, auf und bildet auf dem Boden des Drehrohrofens 10 eine Schüttung 13, oberhalb der sich in einer Trocknungszone 14 eine heiße Ofenatmosphäre ausbildet. Dadurch wird freies wie auch gebundenes Wasser verdampft, und die Charge oder die Beschickung des pelletierten Klärschlamms 12 trocknet. Einige Anteile an kohlenstoffhaltigen flüchtigen Bestandteilen aus dem Klärschlamm 12 werden bereits in der Trocknungszone 14 ausgetrieben. Infolge der in dem Drehrohrofen 10 im Bereich oberhalb der Trocknungszone 14 vorhandenen Temperatur findet dort ein Verbrennungsprozess ausschließlich in der Ofenatmosphäre oberhalb der Schüttung 13 oder an der Kontaktfläche zwischen der Ofenatmosphäre und der Schüttung 13 statt. In einer Hauptzone 15 entweicht aus der Schüttung phosphoroxidreiches Rohgas in die Ofenatmosphäre und verlässt den Drehrohrofen 10 eintragsseitig über ein Abzugsrohr 16 und wird zur Produktgewinnung und Reinigung einer mehrstufigen Abgasbehandlung unterzogen.

Der in den Drehrohrofen 10 eingebrachte Klärschlamm 12 kann in der Form von Klärschlammkoks, Klärschlammbriketts oder Klärschlammpellets oder als sonstiges Granulat vorliegen.

In dieser Hauptzone 15 setzt die Reduktion der in der Schüttung 13 vorliegenden Phosphorverbindungen ein. Da die Phosphorreduktion ein endothermer Prozess ist, richtet sich die benötigte Kohlenstoffmenge im Wälzprozess nicht nach der zur Phosphor-Reduktion stöchiometrisch nötigen Menge, sondern nach dem Wärmebedarf des Verfahrens, weshalb Kohlenstoff deutlich überstöchiometrisch vorhanden sein oder in Form von beispielsweise Koks zugegeben werden muss. Das in dem Klärschlamm 12 enthaltene oder zugegebene Reduktionsmittel Kohlenstoff reagiert zunächst mit dem Luftsauerstoff zu Kohlendioxid, das mit festem Kohlenstoff gemäß der Boudouard-Reaktion zu Kohlenstoffmonoxid reagiert. Das Kohlenstoffmonoxid kann die enthaltenen Verbindungen von Phosphor reduzieren. Die durch die Drehung des Drehrohrofens 10 auf Drehrollen 17, 18 erzeugte Wälzbewegung unterstützt diesen Effekt, indem die Wälzbewegung ständig eine Kontaktzone 19 zwischen der Beschickung 13 und der Ofenatmosphäre in der Hauptzone 15 erneuert; dadurch findet, beginnend ab der Trocknungszone 13, ein Austrag 20 reoxidierten Phosphats in die Gasphase in Form von Phosphorpentoxid statt, wobei Schlacke entsteht. Um diesen Vorgang aufrechtzuerhalten, darf die Schlacke nicht aufschmelzen. Aufgrund dessen werden bei der Einbringung des Klärschlamms 12 in den Drehrohrofen 10 Zuschlagstoffe miteingebracht, die ein Aufschmelzen verhindern sollen. Vorzugsweise wird ein Überschuss an Siliciumdioxid zugesetzt, wodurch die Bildung von Silikaten erzwungen wird. Durch die vorherrschenden Prozessbedingungen - hohe Temperatur und ausreichend hoher Dampfdruck - wird Phosphor aus der Schüttung in den Gasraum verdampft. In der Gasphase werden die Phosphordämpfe exotherm zu Phosphorpentoxid reoxidiert. Neben dieser Reaktion liefert auch die Nachverbrennung des in der Ofenatmosphäre enthaltenen Kohlenmonoxids Wärmeenergie, weshalb sich das Prozessgas weiter erhitzt. Parallel dazu verarmt die Ofenatmosphäre bereits an freiem Sauerstoff.

In einer sich an die Hauptzone 15 anschließenden und auch als Aschenbildungsbereich bezeichneten Reoxidationszone 21 wird von einer Stirnseite des Drehrohrofens 10 her über einen Einlass 22 kalte sauerstoffreiche Luft im Gegenstromprinzip kalte, sauerstoffreiche Luft zugeführt, die am Ofenende auf die dort durch einen Brenner 23 erhitzte Schüttung 13 trifft, wodurch die Luft erwärmt wird. In der Produktcharge nicht ausgedampfte, reduziert vorliegende Metallverbindungen werden hier reoxidiert. Sollten hier beispielsweise Eisenanteile vorliegen, würden diese exotherm zu Eisenoxid reoxidiert. Der für die Reaktion übriggebliebene SiO₂-Anteil sorgt dafür, dass die Asche nicht erweicht und verbacken kann.

Die für den Drehrohrofen 10 vorgesehene Mischung aus Klärschlamm und notwendigen Zusatzstoffen ist vorher beispielsweise mikropelletiert worden. Der Drehrohrofen 10 ist in Richtung zu dem Brenner 23 hin nach unten geneigt, so dass die Schüttung 13, während sich der Drehrohrofen 10 langsam dreht, allmählich in Richtung zu dem Brenner 23 hinbewegt werden. Unterhalb des Brenners 23 wird die Schüttung 13 über einen Auslass 24 in Form von Asche wieder aus dem Drehrohrofen 10 herausgeleitet.

Zur Kühlung des Rückstandes wird dieser durch einen (hier nicht dargestellten) Kühler geleitet. Die dem Rückstand in dem Kühler entzogene Wärme wird gleichzeitig zur Erwärmung der über den Einlass 22 zugeführten Eingangsluft für den Drehrohrofen 10 genutzt. Das als Austrag 20 entweichende Produktgas oder Produktdampf 4, insbesondere Phosphorpentoxid, wird, nachdem es über das Abzugsrohr 16 aus dem Drehrohrofen 10 entfernt worden ist, durch eine Entstaubungsstufe und einen Hydrator geleitet, um Phosphorsäure zu bilden, und darnach gereinigt, um Produktphosphorsäure zu erzeugen.

Der Drehrohrofen 10 eignet sich besonders für die Reduktion phosphathaltigen Klärschlamms, da er die Wärme direkt auf ein Bett aus pelletierten Aufgabepartikeln überträgt. Der erfindungsgemäß eingesetzte Drehrohrofen 10 ist von konventioneller Bauart; er weist beispielsweise stationäre Endabschnitte und einen rotierenden Mittelteil oder Zylinder auf, der mit einem geeigneten feuerfesten Material ausgekleidet und damit verbunden ist. Wenn endseitig der Brenner 23 außermittig an der Stirnwand angeordnet ist und sich der Drehrohrofen 10 auch im Bereich der Reoxidationszone 21 dreht, sind um den Einlass des Brenners 23 in der Stirnwand herum Schuppenbleche angeordnet, die ein unkontrolliertes Einsaugen von Luft oder ein Entweichen von Phosphorpentoxid aus dem Inneren des Drehrohrofens 10 verhindern.

Dem Brenner 23 werden Brennstoff und Luft oder Sauerstoff zugeführt, so dass der Brenner 23 eine Flamme zur direkten Beheizung der Schüttung 13 erzeugt. Dabei werden unter dem Begriff "Flamme" entweder die leuchtenden Anteile einer Oxidationsreaktion, die damit verbundenen heißen Gase oder Beides verstanden.

Um den Prozess zu initiieren, kann ein konventioneller Brennstoff verwendet werden, um den zentralen Teil des Drehrohrofens 10 und die Schüttung 13 vorzuheizen, aber da die Reaktion in der Schüttung 13 elementaren Phosphordampf und Kohlenmonoxid erzeugt, die in der auch als Oxidationszone zu bezeichnenden Hauptzone 15 verbrannt werden, wird weniger Brennstoff benötigt, sobald der Prozess in Betrieb ist. Ausreichend Luft oder Sauerstoff müssen bereitgestellt werden, um den Phosphor und das Kohlenmonoxid über der Schüttung 15 sicher zu oxidieren.

Zusammengefasst lassen sich folgende Bedingungen für die Durchführung des erfindungsgemäßen Verfahrens definieren:
Der Prozess erfordert eine stark reduzierende Atmosphäre in dem Produktcharge des Ofens und unmittelbar darüber (Sauerstofffreiheit, Anwesenheit von Kohlenstoffmonoxid).

Im freien Ofenraum wird zur Unterhaltung der Basisreaktionen und zur sicheren Nachverbrennung von elementarem Phosphor zu Phosphorpentoxid und von Kohlenstoffmonoxid zu Kohlenstoffdioxid eine oxidierende Atmosphäre benötigt.

Die Reaktionspartner des Phosphats, nämlich Kohlenstoff und Siliciumdioxid, müssen im Überschuss und gut vermischt vorliegen.

Der Klärschlamm darf nicht zu viel Eisen enthalten - dieses wird häufig als effizientes Phosphor-Fällmittel eingesetzt, jedoch ist der Phosphor aus diesen Verbindungen kaum noch herauszulösen, wie durch die Erfindung festgestellt wurde. Die Anwesenheit von Eisenphosphat setzt die Phosphorabdampfrate auf einen niedrigen Wert herab.

Besser geeignet sind Klärschlämme, die mit Aluminium- oder Calcium-basierten Fällmitteln behandelt wurden. Versuche mit reinem Aluminium- oder CalciumPhosphat ergeben eine sehr hohe Abdampfrate von Phosphor.

Die Prozesstemperatur liegt über 1.200 °C, bevorzugt über 1.250 °C.

Die Verweilzeit des Einsatzmaterials, d. h., der Schüttung 13, in dem Drehrohrofen 10 bei der höchsten hier angewendeten Temperatur von 1.280 °C beträgt wenigstens zwanzig Minuten, bevorzugt zwischen zwanzig und vierzig Minuten. Hierdurch wird eine schnelle Erwärmung auf die Prozesstemperatur erreicht.

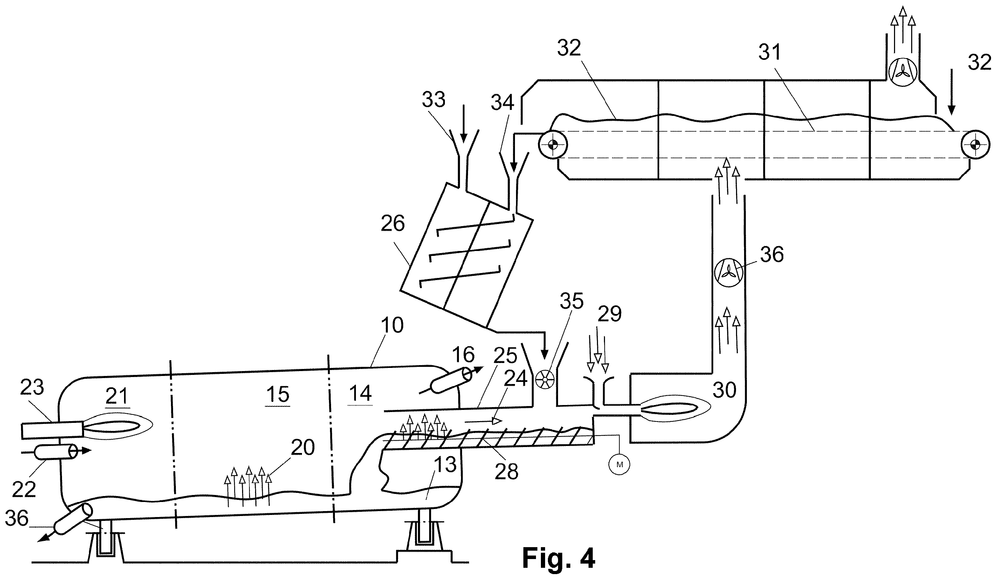

In einer weiteren Ausführungsform der Erfindung (Fig. 4) wird aus einer Kläranlage herrührender, von einer Zentrifuge auf einen Feuchtigkeitsgehalt von 75 bis 80 % vorgetrockneter Klärschlamm 32 auf einen Bandtrockner 31 aufgebracht, auf der Klärschlamm 32 bei Temperaturen von 120 bis 125 °C weiter getrocknet wird, bis er noch eine restliche Feuchtigkeit von etwa 10 % hat. Die auf dem Förderband 31 vorhandenen Klärschlammpartikel 32 bilden beispielsweise ein Granulat.

Den Klärschlammpartikeln 32 werden, bevor diese dem Drehrohrofen 10 zugeführt werden, zusätzlich über einen Trichter 33 zugeführte Kohlenstoffpartikel und Siliciumdioxid-Partikel, insbesondere in der Form von Quarzsand, einem Mischer 26 zugemischt, wobei die Klärschlammpartikel 32 selber über einen Trichter 34 in den Mischer 26 gelangen.

Aus dem Mischer 26 wird eine dadurch entstandene Klärschlammmischung 28 über eine Zellradschleuse 35 einer Förderschnecke 25 zugeführt, die die Klärschlammpartikel 32 in den Drehrohrofen 10 einbringt. Dabei ragt die Förderschnecke 25 in das Innere des Drehrohrofens 10 hinein, damit die Klärschlammpartikel 32 bereits vorerwärmt werden, bevor sie auf den Boden des Drehrohrofens 10 herunterfallen. Die Förderschnecke 25 ragt etwa in der Mitte der Seitenwand des Drehrohrofens 10 oder im unteren Drittel der Seitenwand des Drehrohrofens 10 in diesen hinein. Durch eine Schuppendichtung wird hierbei eine ausreichende Abdichtung des Innenraums des Drehrohrofens 10 gegenüber dem Außenbereich erreicht.

Das für die Zumischung in dem Mischer 26 erforderliche Massenverhältnis des in dem Klärschlamm enthaltenen Phosphors zu Siliciumdioxid wird kontinuierlich oder vorzugsweise in zeitlichen Abständen ermittelt, nachdem in der Kläranlage durch Röntgenfluoreszenz-Analyse oder durch ICP-Emissionsspektrometrie (ICP OES) (= Inductively-Coupled Plasma Optical Emission Spectrometry), d. h., in einem Verfahren der optischen Emissionsspektrometrie mit induktiv gekoppeltem Plasma, festgestellt worden ist, zu welchen Anteilen Phosphor und Siliciumdioxid bereits in dem Klärschlamm vorhanden sind, wobei Kohlenstoff beispielsweise coulometrisch analysiert wird, so dass auf der Basis dieses Ergebnisses in dem Mischer 26 soviel an Kohlenstoff und Siliciumdioxid zugeführt wird, bis ein wenigstens stöchiometrisches Verhältnis der Masse des Phosphors zu der Masse des Kohlenstoffs und zu der Masse des Siliciumdioxids von 1:1:3 erreicht wird, dass das erforderlichenfalls dem Klärschlamm zugemischte Siliciumdioxid und der erforderlichenfalls dem Klärschlamm zugemischte Kohlenstoff zusammen mit den Klärschlammmischung 28 dem Drehrohrofen 10 zugeführt werden, dass der Klärschlamm bzw. das Gemisch aus dem Klärschlamm, dem zugesetzten Siliciumdioxid und dem zugesetzten Kohlenstoff einem Wälzprozess unterworfen wird und der ausgetriebene Phosphor in Form von gasförmigem Phosphorpentoxid gesammelt wird.

In besonders vorteilhafter Weise wird das Zumischen von Kohlenstoff und Siliciumdioxid dadurch realisiert, dass dem Klärschlamm Kohlenstoff und Siliciumdioxid in überstöchiometrischen Massen zugesetzt werden, bis das Verhältnis der Masse des Phosphors zu der Masse des Kohlenstoffs und zu der Masse des Siliciumdioxids von 1:3:5 erreicht wird. Auf diese Weise lässt sich ein sehr hoher Anteil des Phosphors, beispielsweise von 80 %, aus der Klärschlammmischung 28 in dem Drehrohrofen 10 entziehen, der aufgebaut ist, wie in Fig. 3 dargestellt ist.

Wie auch in Fig. 3a dargestellt, verlässt in der Ofenatmosphäre gebildetes phosphoroxidreiches Rohgas, d. h., die leichtflüchtigen ausgegasten Bestandteile des Klärschlamms, den Drehrohrofen 10 über das Abzugsrohr 16, das im oberen Bereich der stirnseitigen Wand auf der dem Brenner 23 gegenüberliegenden Seite angeordnet ist.

Gleichzeitig verlässt erwärmte Luft entgegen der Förderrichtung der Klärschlammmischung in der Förderschnecke 25 im Gegenstromprinzip oberhalb der über die 'Förderschnecke 25 zugeführten Klärschlammmischung 28 den Drehrohrofen 10 und entzieht der durch die heiße Atmosphäre des Drehrohrofens 10 bereits vorgewärmten Klärschlammmischung 28 die in diesem enthaltenen flüchtigen Kohlenwasserstoffe, die, angesaugt von einem Ventilator 36, vorzugsweise zusammen mit extern zugeführter Verbrennungsluft 29 in einer Brennkammer 30 zu verbrannt werden; die Abgase werden vorzugsweise zu dem Bandtrockner 31 geleitet, um in diesem die Erwärmung der Klärschlammpartikel 32 zu unterstützen.

Über einen Auslass 36 wird Rest-Klärschlamm, dem der Phosphor weitgehend entzogen worden ist, aus dem Drehrohrofen 10 ausgeleitet.

## Patentansprüche

1. Verfahren zur Gewinnung von Phosphor aus getrocknetem Klärschlamm (12), **dadurch gekennzeichnet, dass** das Massenverhältnis des in dem Klärschlamm (12) enthaltenen Phosphors ermittelt wird, dass dem Klärschlamm (12) soviel Kohlenstoff und soviel Siliciumdioxid zugesetzt werden, bis ein wenigstens stöchiometrisches Verhältnis der Masse des Phosphors zu der Masse des Kohlenstoffs und zu der Masse des Siliciumdioxids von 1:1:3 erreicht wird, dass der Klärschlamm (12) zusammen mit dem Siliciumdioxid und dem Kohlenstoff einem Drehrohrofen (10) zugeführt werden und dass der Klärschlamm (12) bzw. das Gemisch aus dem Klärschlamm (12), dem zugesetzten Siliciumdioxid und dem zugesetzten Kohlenstoff einem Wälzprozess unterworfen wird und der ausgetriebene Phosphor in Form von gasförmigem Phosphorpentoxid gesammelt wird.

2. Verfahren nach Anspruch 1, **dadurch gekennzeichnet, dass** dem Klärschlamm (12) Kohlenstoff und Siliciumdioxid in überstöchiometrischen Massen zugesetzt werden, bis das Verhältnis der Masse des Phosphors zu der Masse des Kohlenstoffs und zu der Masse des Siliciumdioxids von 1:3:5 erreicht wird.

3. Verfahren nach Anspruch 1 oder 2, **dadurch gekennzeichnet, dass** der Klärschlamm (12) in Form von Klärschlammkoks, Klärschlammbriketts oder Klärschlammpellets oder als sonstiges Granulat in den Drehrohrofen (10) eingebracht wird.

4. Verfahren nach einem der Ansprüche 1 bis 3, **dadurch gekennzeichnet, dass** eine auf dem Boden des Drehrohrofens (10) liegende, aus dem Klärschlamm (12) gebildete Schüttung (13) in einer reduzierenden Substanz oder in einer Umgebung von Kohlenstoffkoks oder in Gegenwart einer reduzierenden Atmosphäre oder in Abwesenheit von Sauerstoff reduziert wird.

5. Verfahren nach Anspruch 4, **dadurch gekennzeichnet, dass** das Verfahren in Anwesenheit von Kohlenstoffmonoxid durchgeführt wird.

6. Verfahren nach einem der Ansprüche 1 bis 5, **dadurch gekennzeichnet, dass** der Klärschlamm (12) verwendet wird, der vorher mit einem Aluminium- oder einem Calcium-basierten Fällmittel behandelt wurde.

7. Verfahren nach einem der Ansprüche 1 bis 6, **dadurch gekennzeichnet, dass** die Prozesstemperatur über 1.200 °C liegt, insbesondere über 1.250 °C.

8. Verfahren nach einem der Ansprüche 1 bis 7, **dadurch gekennzeichnet, dass** die Verweildauer des Klärschlamms (12) in dem Drehrohrofen (10) eine Zeitdauer von zwanzig Minuten nicht unterschreitet, insbesondere bei einer Temperatur von 1.280 °C.

9. Vorrichtung zur Durchführung des Verfahrens nach einem der Ansprüche 1 bis 8 unter Einsatz eines Drehrohrofens, **dadurch gekennzeichnet, dass** sie Transportmittel, insbesondere wenigstens ein Förderband, zum Transport des pelletierten oder koksförmigen vorgetrockneten Klärschlamms (12) zu einem Drehrohrofen (10) und Heizmittel (21) zur Erhitzung des Klärschlamms (12) in dem Drehrohrofen (10) sowie Mittel zum Auffangen von Phosphorpentoxid und Mittel zum Abtransport von Schlacke umfasst.

10. Vorrichtung nach Anspruch 9, **dadurch gekennzeichnet, dass** der Klärschlamm (12) in Form von Klärschlammpartikeln (32) über einen Bandtrockner (31) zu einer Mischanlage mit einem Mischer (26) förderbar ist, in dem den Klärschlammpartikeln (32) Kohlenstoffpartikel und Quarzsand zumischbar oder Kohlenstoff und Siliciumdioxid zusetzbar sind.

11. Vorrichtung nach Anspruch 10, **dadurch gekennzeichnet, dass** eine aus dem Mischer (26) erhaltene Klärschlammmischung (28) über eine Förderschnecke (25) in den Drehrohrofen (10) einbringbar ist, insbesondere über eine Zellradschleuse (35).

12. Vorrichtung nach einem der Ansprüche 9 bis 11, **dadurch gekennzeichnet, dass** der Drehrohrofen (10) einen Auslass (16) aufweist, über den in dem Drehrohrofen (10) erzeugtes phosphorhaltiges Rohgas (20), insbesondere Phosphorpentoxid, aus dem Drehrohrofen (10) herausführbar ist.

## Claims

1. Process for obtaining phosphorus from dried sewage sludge (12), **characterized in that** the mass ratio of the phosphorus contained in the sewage sludge (12) is determined, that as much carbon and as much silicon dioxide are added to the sewage sludge (12) until an at least stoichiometric ratio of the mass of the phosphorus to the mass of the carbon and to the mass of the silicon dioxide of 1: 1: 3 is achieved, that the sewage sludge (12) together with the silicon dioxide and the carbon are fed to a rotary kiln (10), that the sewage sludge (12) or the mixture of the sewage sludge (12), of the added silicon dioxide and of the added carbon is subjected to a rolling process and the extracted phosphorus is collected in the form of gaseous phosphorus pentoxide.

2. Process according to claim 1, **characterized in that** carbon and silicon dioxide are added to the sewage sludge (12) in superstoichiometric masses until the ratio of the mass of the phosphorus to the mass of the carbon and to the mass of the silicon dioxide of 1: 3: 5 is achieved.

3. Process according to claim 1 or 2, **characterized in that** the sewage sludge is introduced into the rotary kiln (10) in the form of sewage sludge coke, sewage sludge briquettes, or sewage sludge pellets or as another granulate.

4. Process according to any of claims 1 to 3, **characterized in that** a bed (13) formed on the bottom of the rotary kiln (10) and formed from sewage sludge (12) is reduced in a reducing substance, or in an environment of carbon coke or in the presence of a reducing atmosphere, or in the absence of oxygen.

5. Process according to claim 4, **characterized in that** the process is carried out in the presence of carbon monoxide.

6. Process according to any of claims 1 to 5, **characterized in that** sewage sludge (12) is used which has previously been treated with an aluminium-based or a calcium-based precipitant.

7. Process according to any of claims 1 to 6, **characterized in that** the process temperature is above 1.200 °C, in particular above 1.250 °C.

8. Process according to any of claims 1 to 7, **characterized in that** the exposure time of the sewage sludge (12) in the rotary kiln (10) does not fall below a period of twenty minutes, in particular at a temperature of 1.280 °C.

9. Device for carrying out the method according to one of claims 1 to 8 using a rotary kiln (10), **characterized in that** it comprises transport means, in particular at least one conveyor belt, for transporting pelletized or coke-shaped pre-dried sewage sludge (12) to the rotary kiln (10) and heating means (21) for heating the sewage sludge (12) in the rotary kiln (10) and means for collecting phosphorus pentoxide and means for removing slag.

10. Device according to claim 9, **characterized in that** the sewage sludge (12) in the form of sewage sludge particles (32) is conveyed via a belt dryer (31) to a mixing plant comprising a mixer (26) in which carbon particles and quartz sand are admixed to the sewage sludge particles (32) as required to obtain a stoichiometric mass ratio of the mass of the phosphorus in the sewage sludge particles (32), or **in that** contain carbon and silicon dioxide are added.

11. Device according to claim 10, **characterized in that** a sewage sludge mixture (28) obtained from the mixer (26) is introduced into the rotary kiln (10) via a screw conveyor (25), in particular via a cellular wheel sluice (35).

12. Device according to any of claims 9 to 11, **characterized in that** phosphorus-containing raw gas (20), in particular phosphorus pentoxide, produced in the rotary kiln (10) is led out of the rotary kiln (10) via an outlet (16).

## Revendications

1. Procédé pour récupérer de phosphore à partir de boues d'épuration séchées (12), **caractérisé en ce que** on détermine le rapport massique du phosphore contenu dans les boues d'épuration (12), **en ce qu'**on ajoute autant de carbone et de dioxyde de silicium aux boues d'épuration (12) jusqu'à ce qu'on ait un rapport au moins stœchiométrique entre la masse du phosphore, la masse du carbone et la masse du dioxyde de silicium de 1 : 1 : 3, que les boues d'épuration (12) sont introduites avec le dioxyde de silicium et le carbone dans un four rotatif (10), que les boues d'épuration (12) ou le mélange des boues d'épuration (12), du dioxyde de silicium ajouté et du carbone ajouté sont soumis à un processus de roulage et que le phosphore extrait est recueilli sous forme de pentoxyde de phosphore gazeux.

2. Procédé selon la revendication 1, **caractérisé en ce que** le carbone et le dioxyde de silicium sont ajoutés aux boues d'épuration (12) en quantités supérieures à la stoechiométrie jusqu'à ce qu'on arrive à un rapport entre la masse de phosphore, la masse de carbone et la masse de dioxyde de silicium de 1 : 3 : 5.

3. Procédé selon la revendication 1 ou 2, **caractérisé en ce que** les boues d'épuration sont mises dans le four rotatif (10) sous forme de coke de boues d'épuration, de briquettes de boues d'épuration, de granulés de boues d'épuration ou d'un autre granulat.

4. Procédé selon l'une quelconque des revendications 1 à 3, **caractérisé en ce que** le lit (13) formé au fond du four rotatif (10) et fait de boues d'épuration (12) est réduit dans une substance réductrice, ou dans un environnement de coke de carbone, ou dans une atmosphère réductrice, ou en l'absence d'oxygène.

5. Procédé selon la revendication 4, **caractérisé en ce que** le procédé est fait en présence de monoxyde de carbone.

6. Procédé selon l'une quelconque des revendications 1 à 5, **caractérisé en ce que** on utilise des boues d'épuration (12) qui ont déjà été traitées avec un précipitant à base d'aluminium ou de calcium.

7. Procédé selon l'une quelconque des revendications 1 à 6, **caractérisé en ce que** la température du procédé est supérieure à 1 200 °C, surtout supérieure à 1 250 °C.

8. Procédé selon l'une quelconque des revendications 1 à 7, **caractérisé en ce que** le temps d'exposition des boues d'épuration (12) dans le four rotatif (10) n'est pas inférieur à vingt minutes, surtout à une température de 1 280 °C.

9. Dispositif pour mettre en œuvre le procédé selon l'une quelconque des revendications 1 à 8 à l'aide d'un four rotatif (10), **caractérisé en ce qu'**il comprend des moyens de transport, en particulier au moins une bande transporteuse, pour transporter les boues d'épuration (12) pré-séchées sous forme de granulés ou de coke vers le four rotatif (10), et des moyens de chauffage (21) pour chauffer les boues d'épuration (12) dans le four rotatif (10), ainsi que des moyens pour collecter le pentoxyde de phosphore et des moyens pour éliminer les scories.

10. Dispositif selon la revendication 9, **caractérisé en ce que** les boues d'épuration (12) sous forme de particules de boues d'épuration (32) sont transportées via un séchoir à bande (31) vers une installation de mélange comprenant un mélangeur (26) dans lequel des particules de carbone et du sable de quartz sont mélangés aux particules de boues d'épuration (32) selon les besoins pour obtenir un rapport massique stœchiométrique de la masse du phosphore dans les particules de boues d'épuration (32), ou **en ce que** du carbone et du dioxyde de silicium sont ajoutés.

11. Dispositif selon la revendication 10, **caractérisé en ce que** le mélange de boues d'épuration (28) qui sort du mélangeur (26) est envoyé dans le four rotatif (10) par un convoyeur à vis (25), surtout par une écluse à roue cellulaire (35).

12. Dispositif selon l'une quelconque des revendications 9 à 11, **caractérisé en ce que** le gaz brut contenant du phosphore (20), surtout du pentoxyde de phosphore, produit dans le four rotatif (10) est sorti du four rotatif (10) par une sortie (16).
